# NEUE EUROPÄISCHE PATENTSCHRIFT

(11) **EP 0 849 034 B2**
(45) Veröffentlichungstag und Bekanntmachung des Hinweises auf die Entscheidung über den Einspruch: **12.10.2005**
(45) Hinweis auf die Patenterteilung: 30.09.1998
(21) Anmeldenummer: 97110588.7
(22) Anmeldetag: 27.06.1997
(51) Int. Cl.: B23Q 16/08

(54) **Kupplungsvorrichtung**
Coupling device
Dispositif d'accouplement

(30) Priorität: 02.12.1996 DE 19649898
(43) Veröffentlichungstag der Anmeldung: 24.06.1998
(73) Patentinhaber: System 3R International AB, 162 26 Vällingby (SE)
(72) Erfinder: Nordquist, Hakon, 187 75 Täby (SE)
(74) Vertreter: Zinngrebe, Horst

(56) Entgegenhaltungen:
- EP-A- 0 722 809

## Beschreibung

Die Erfindung betrifft ein Spannsystem nach der Präambel des Patentanspruches 1.

Bekannt sind mehrere verschieden Spannsystem (EP-A 0255042, DE-A 44 44 241), deren eines Kupplungsorgan mit dem Kopf einer Werkstückbearbeitungsmaschine, vorzugsweise einer Elektroerosionsmaschine, verbunden werden kann und deren anderes Kupplungsorgan, das entweder ein zu bearbeitendes Werkstück oder ein Werkzeug trägt, in wiederholbarer Weise an das Kupplungsorgan angespannt werden kann. Trotz sehr häufigem Abnehmen und wieder Anspannen des zweiten Kupplungsorgans bleibt die Positionsgenauigkeit des zweiten Kupplungsorgans relativ zum ersten Kupplungsorgan mit außerordentlich hoher Genauigkeit im Bereich von 1-2 Mikrometern innerhalb beispielsweise eines karthesischen Koordinatensystemes unverändert erhalten.

Je nach Größe des zu bearbeitenden Werkstücks und je nach der Kompliziertheit der Bearbeitung an dem Werkstück eignet sich in einem Fall mehr das eine Spannsystem und in anderen Fall mehr das andere für den beabsichtigten Zweck. Daher kann sich eine erste Folge von Bearbeitungsschritten an einem Werkstück zweckmäßiger an einem Spannsystem und eine Folge von Bearbeitungsschritten an einem anderen Werkstück besser an dem anderen Spannsystem durchführen lassen. Für solche Fälle werden demzufolge wenigstens zwei Bearbeitungseinrichtungen benötigt, die mit unterschiedlichen Spannsystemen arbeiten.

Der Erfindung liegt daher die Aufgabe zugrunde, den Übergang von einem Spannsystem zu einem anderen Spannsystem ohne Genauigkeitsverlust in der Positionierung selbst bei einer sehr hohen Anzahl von Spann- und Lösevorgängen zu vereinfachen.

Bei dem eingangs genannten Spannsystem sind dazu die Merkmale des kennzeichnenden Teils des Patentanspruches 1 vorgesehen.

Damit wird es möglich, an ein und derselben Bearbeitungsmaschine einen Werkstückhalter anzuspannen, der einem ersten Spannsystem entsprechende und mit dem Referenzelementen zusammenwirkende Referenzgegenelemente aufweist oder einen anderen Werkstückhalter anzuspannen, der einem anderen Spannsystem entsprechende, mit den Referenzteilen zusammenwirkende Referenzgegenteile besitzt. Bei numerisch gesteuerten Bearbeitungsmaschinen lassen sich die Parameter, die den Übergang von einem Spannsystem zum anderen beschreiben, entsprechend abspeichern, so daß mit der numerischen Steuerung der Bearbeitungseinrichtung sowohl mit dem einen wie auch mit dem anderen Spannsystem automatisch gearbeitet werden kann.

Vorteilhaft ist daß die Referenzelemente kreuzweise mit radialem Abstand zur Referenzachse (Z'-Achse) angeordnet sind, was eine Festlegung Z'-Achse im Schnittpunkt des Kreuzes erleichert.

Es ist dann vorteilhaft, wenn jedes Referenzelement eine axialvorstehende Leiste mit Radiusparallelen, konischen Seitenflächen aufweist, weil diese Ausbildung der Referenzelemente in besonders einfacher und hochgenauerweise mit bevorzugt kreuzweise angeordneten Referenzgegenelementen an einem weiteren Kupplungsgegenstück beim Spannen zusammenwirken können, wobei jedes Referenzgegenelement wenigstens eine radiusparallele, axial elastische Lippe aufweist, welche an einem radiusparallelen Schlitz ausgebildet ist.

Zur Schaffung einer eindeutigen Z'-Referenz empfiehlt es sich, an dem Kupplungsteil mehrerere in Umfangsrichtung beabstandetete, zur Referenzachse (Z-Achse) parallele Pfosten vorzusehen, deren freie Stirnflächen die Z'-Referenz bilden. Hierbei empfiehlt es sich, daß die freie Stirnfläche des weiteren Kupplungsgegenstückes wenigstens abschnittweise als Z*'*-Referenz ausgebildet ist, so daß die freie Stirnfläche beim Anspannen des weiteren Kupplungsgegenstückes an das Kupplungsteil gegen die freien Stirnflächen der parallelen Pfosten zur Anlage kommen.

Weiterhin ist vorteilhaft, wenn für das erste und das zweite Referenzsystem ein erster und ein zweiter Zugbolzen vorgesehen sind, wobei der erste Zugbolzen eine kleinere axiale Länge hat als der zweite Zugbolzen und beide Zugbolzen einen gleichen, mit der Spanneinrichtung zusammenarbeitenden Kopf aufweisen. Der zweite Zugbolzen mit an ihm gegebenenfalls lösbar befestigtem zweiten Kupplungsgegenstück laßt sich von dem Greifer eines Werkzeugmagazins besonders einfach und definiert dann erfassen, wenn in Weiterbildung der Erfindung die Distanz zwischen benachbarten Pfosten mindestens gleich einem vorgebenen Abstand zum Durchgriff eines Werkzeugs beispielsweise des erwähnten Greifers ist.

Die die Z-Referenz definierenden Referenzteile weisen häufig eine Druckluftöffnung auf, so daß die aus diesen Öffnungen austretende Druckluft bei Annäherung der Gegenreferenz letztere von Verunreinigungen frei bläst. Hierbei bringt eine Ausführungsform der Erfindung Vorteile, gemäß welcher der zweite Zugbolzen an seinem dem Kopf gegenüberliegenden Abschnitt ein radial derart verbreitertes Profil hat, daß bei in die Spanneinrichtung eingefügten zweiten Zugbolzen die die Z-Referenz definierenden Referenzteile im wesentlichen luftdicht abgedeckt sind. Es können dann spetielle steuerbare Absperrventile für die in die Referenzteile mündenden Druckluftkanäle entfallen.

Beim Wechsel eines dem zweiten Referenzsystem zugeordneten Werkzeugs wird der zugehörige Zugbolzen von dem Magazingreifer in einer vorgegebenen axialen Höhe ergriffen. Um diese Höhe auch beim Wechsel eines dem ersten Referenzsystem zugeordneten Werkzeugs für den Magazingreifer trotz kürzerem ersten Zugbolzen nutzbar zu machen, ist in Weiterbildung der Erfindung vorgesehen, daß das Kupplungsgegenstück bezüglich seiner Achse gegenüberliegende, abgeflachte achsparallele Umfangsabschnitte, die zweckmäßig zu den Referenzgegenteilen axial beabstandet sind, zum Eingriff des Werkzeugs beispielsweise des Magazingreifers aufweist. Die Programmierung des Werkzeugwechslers wird dadurch vereinfacht.

Im übrigen sind bevorzugte Ausgestahungen der Erfindung in den Unteransprüchen angegeben.

Die Erfindung wird nachstehend anhand des in der beigefügten Zeichnung dargestellten Ausfünrungsbeispiele im einzelnen beschrieben.

Es zeigen:
- Figur 1: eine Ansicht von unten eines Bearbeitungskopfes für eine Senkerodiermaschine;
- Figur 2: einen Axialschnitt durch den Bearbeitungskopf nach Figur 1;
- Figur 3: eine perspektivische Ansicht eines ersten Kupplungsgegenstückes;
- Figur 4: eine perspektivische Draufsicht auf ein zweites Kupplungsgegenstück;
- Figuren 5 und 6: schematische Darstellungen von Zugbolzen zur weiteren Erläuterungen der Erfindung; und
- Figuren 7 und 8: eine weitere Ausführungsform des ersten Kupplungsgegenstücks.

Der im ganzen mit 1 bezeichnete Bearbeitungskopf besitzt ein Gehäuse 2**,** welches einen plattenförmigen Deckel 3 und ein becherförmiges, einen radial nach außen weisenden Flansch 5 aufweisendes Hauptteil 4 umfaßt. Der Deckel 3 ist mit einem zentralen Kanal 6 und der Boden 7 des Hauptteils 4 ist mit einer zentralen, runden Öffnung 8 versehen, deren lichte Weite größer ist als der Durchmesser des Kanals 6. Der Hauptteil 4 ist an seinem Flansch 5, der in Höhe des oberen Hauptteilrandes ausgebildet ist, mit dem Deckel 3 so verbolzt, daß der Kanal 6 mit der Öffnung 8 axial fluchtet.

In das radial aufgeweitete hauptteilseitige Ende des Kanals 6 ist das obere Ende 11 eines dickwandigen Rohrstückes 10 mit zwischengelegtem Dichtring eingepaßt, dessen unteres Ende 13 mediumdicht in die Öffnung 8 eingepaßt ist. An einem mittleren Abschnitt des Rohrstücks 10 sind in seine Wandung mehrere in Umfangsrichtung gleichverteilte Durchgangsbohrungen 12, 14 eingebracht, wobei in jeder der Durchgangsbohrungen je eine Rastkugel 15, 17, 19 radial nach außen beweglich eingefangen ist.

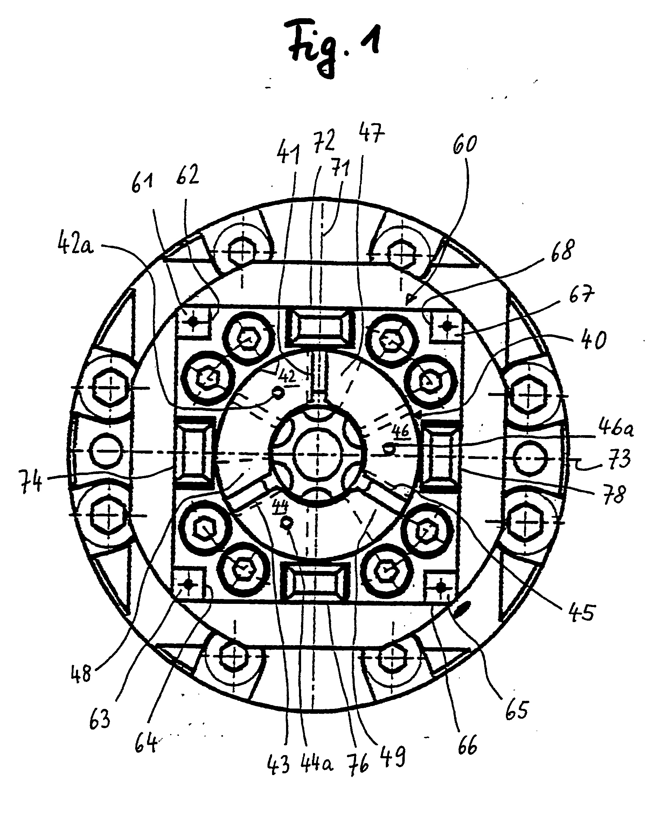

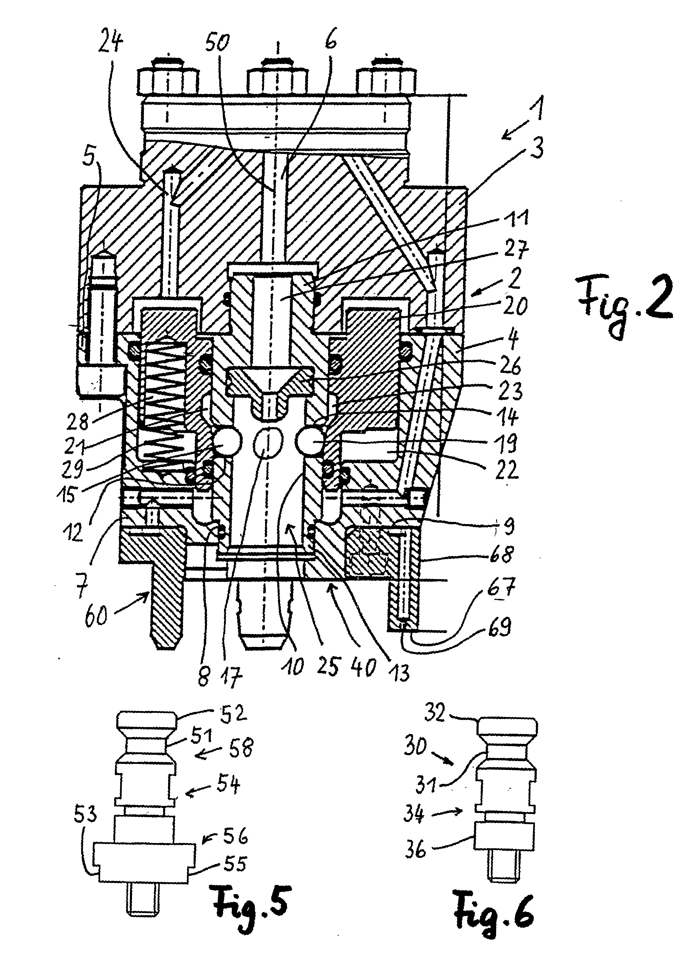

An der Außenfläche des mittleren Abschnittes des Rohrstücks 10 ist ein ringzylindrischer Kolben 20 in der vom Hauptteil 4 und dem Boden des Deckels 3 umschlossenen Ringkammer 22 axial verschieblich angeordnet. In der Innenwand des Kolbens 20 sind in einer der Zahl der Rastkugeln 15, 17, 19 gleichen Anzahl der Form der Rastkugeln angepaßte Vertiefungen 21, 23 derart ausgebildet, daß dann, wenn der Kolben 20 sich am unteren Umkehrpunkt seines Verschiebeweges befindet, jede Rastkugel in die ihr benachbarte Vertiefung soweit eindringen kann, daß keine der Rastkugeln über die Innenwandfläche des Rohrstücks 10 radial einwärts vorsteht. Befindet sich der Kolben 20 am oberen Umkehrpunkt seines Verschiebeweges, hat die Innenwand des Kolbens jede der Rastkugeln aus ihrer Vertiefung heraus und in die zugehörige Durchgangsbohrung 12, 14 soweit hineingedrückt, daß jede Rastkugel gemäß Figuren 1 und 2 teilweise radial nach innen über die Innenwandfläche des Rohrstücks 10 vorsteht.

Gemaß EP-A-0 255 042 erfolgt die Axialverschiebung des Kolbens 20 am Rohrstück 10 in Richtung des Hauptteilbodens 7 unter der Wirkung von Druckluft, die dem oberen vom Kolben 20 freigelassenen Teil der Ringkammer 22 über einen durch den Deckel 3 getriebenen Drucluftkanal 24 aus einer nicht dargestellten Druckluftquelle zugeführt werden kann. Nicht dargestellt sind ferner steuerbare Entlüftungsmittel für den Druckduftkanal 24. Eine (oder mehrere) Druckfedern 29, die sich einerseits am Hauptteilboden 7 und andererseits in einer Tasche 28 (von mehreren gleichartigen Taschen) des Kolbens 20 abstützen, drückt den Kolben 20 axial in Richtung des oberen Umkehrpunktes seines Verschiebeweges, wie das Figur 2 zeigt.

Das Rohrstück 10 weist eine von seinem offenen unteren Ende 13 ausgehende Bolzenaufnahme 25 vorgegebener lichter Weite und kreis förmigem Querschnitt auf, die sich nach innen über den Kranz der Rastkugeln 15, 17, 19 hinaus erstreckt, an ihrem inneren Ende eine eingesetzte Dichtmanschette 26 aufweist und jenseits der Dichtmanschette 26 mit einer radial einspringenden Schulter in einen mit dem Kanal 6 kommunizierenden Spülkanal 27 reduzierten Durchmessers übergeht.

Ein im wesentlichen zylindrischer erster Zugbolzen 30 (Figur 6) mit axial abgestufter Außenkontur besitzt an seinem zylindrischen Kopf 32 und seinem mittleren Abschnitt 34 einen Außendurchmesser, der der lichten Weite der Bolzenaufnahme 25 entspricht, sodaß der Zugbolzen 30 in die Bolzenaufnahme 25 einfügbar ist. Dazu, weist der Zugbolzen 30 zwischen Kopf 32 und mittlerem Abschnitt 34 eine Eindrehung 31 auf, in welche die Rastkugeln 15, 17, 19 eindringen können und dadurch den Zugbolzen 30 in der Bolzenaufnahme 25 gegen Abziehen des Zugbolzens nach unten sicher halten, wenn der Kolben 20 sich in seinem oberen Umkehrpunkt seines Verschiebeweges befindet. Der Zugbolzen 30 kann mit seinem unteren Abschnitt 36 in nicht dargestellter Weise an einem ersten Kupplungsgegenstück 90 (Figur 3) dauerhaft oder vorübergehend befestigt werden.

Das Kupplungsgegenstück 90 besitzt einen im wesentlichen zylindrischen Mantel. Aus seiner Oberseite stehen drei in Umfangsrichtung zweckmäßig gleich beabstandete Leisten 95, 97, 99 axial vor, von denen jede sich von einem mittleren, erhabenen und eine zentrale Durchgangsbohrung 70 umschließenden Ring ausgehend nach radial außen erstreckt und zwei gegenüberliegende radiusparallele Keilflächen besitzt. Die Außenkonturen aller Leisten 95, 97, 99 sind gleich. Die Leisten 95, 97, 99 mit ihren Keilflächen gehören im Sinne der Ansprüche zu Referenzgegenteilen eines ersten Referenzsystems, auf das noch eingegangen wird.

Zwischen je zwei Leisten sind in Umfangsrichtung nahe der Peripherie des Kupplungsgegenstücks 90 exakt ebene Flächenstücke 91, 93, 98 ausgebildet, die auf einer gemeinsamen, zur Ache 100 des Kupplungsgegenstücks 90 sich quer erstreckenden Ebene liegen. Diese Ebene liegt axial unterhalb der axialen Höhe der Keilflächen der Leisten 95, 97, 99 und kann eine Z-Referenzebene im ersten Referenzsystem bilden. Im übrigen ist im praktischen Einsatz der Erfindung ein Werkstück oder Werkzeug, beispielsweise eine Elektrode an der Unterseite des Kupplungsgegenstücks 90 befestigt. Schließlich sind an der Unterseite des ersten Kupplungsgegenstücks 90 zwei bezüglich der Achse 100 gegenüberliegende und zur Achse 100 parallele Abflachungen 92, 94 in gleichem radialen Abstand von der Achse 100 ausgebildet, auf die noch eingegangen wird.

An der freien Stirnseite des Hauptteilbodens 7 ist ein Kupplungsorgan 40 ausgebildet das an sich aus der Schrift DE-A-44 44 241 bekannt ist. Als Referenzteile weist das Kupplungsorgan drei in Umfangsrichtung gleichbeabstandete erste Referenzteile 42, 44, 46 in Form von Flächenabschnitten auf, die sich in einer zur Achse 50 des Bearbeitungskopfes 1 querliegenden XY-Ebene erstrecken. In dem ersten Referenzsystem bildet die Achse 50 die Z-Achse. Zwischen je zwei ersten Referenzteilen 42, 44, 46 sind am Kupplungsorgan 40 radiale Anschlagkanten 41, 43, 45 als in Umfangsrichtung genommene Begrenzungen je eines Schlitzes ausgebildet, wobei jeder Schlitz gegenüber der zugehörigen Anschlagkante von einem in Umfangsrichtung wirkenden elastischen Andruckelement in Form einer radial elastischen Lippe 47, 48, 49 begrenzt ist. Die Lage der Anschlagkanten 41, 43, 45 in Umfangsrichtung ist der Lage der Leisten 95, 97, 99 angepaßt, sodaß beim Anspannen des Kupplungsgegenstücks 90 mittels des Zugbolzens 30 die Leisten 95, 97, 99 in die Schlitze am Kupplungsorgan 40 eindringen können, bis die Flächenstücke 91, 93, 98 zur Anlage an die Referenzteile 42, 44, 46 gelangen. Die Achse 100 fällt dann mit der Z-Achse 50 zusammen und das Kupplungsgegenstück 90 ist in einer zur Z-Achse 50 senkrechten XY-Ebene winkelmäßig positioniert.

An dem Bearbeitungskopf 1, und zwar an der freien Stirnfläche des Hauptteilbodens 7, ist ferner ein im ganzen mit 60 bezeichnetes Kupplungsteil befestigt, welches das Kupplungsorgan 40 umfangmäßig umgibt. Dazu ist radial außerhalb der ersten Referenzteile 42, 44, 46 am Hauptteilboden 7 eine axial zurückversetzte Ringschulter 9 ausgebildet, an welcher das Kupplungsteil 60 verbolzt ist. Aus den vier Eckbereichen des einen quadratischen Umriß aufweisenden Kupplungsteils 60 steht je ein Pfosten 62, 64, 66, 68 vor. Jeder Pfosten besitzt eine plan geschliffene freie Stirnfläche 61, 63, 65, 67 derart, daß alle vier Stirnflächen 61, 63, 65, 67 in einer zur Z-Achse 50 senkrechten (XY-) Ebene liegen und somit eine Z-Referenz bilden.

Zwischen je zwei Pfosten 62, 64, 66, 68 stehen aus dem Kupplungsteil 60 ferner je ein Zapfen 72, 74, 76, 78 vor, die wie folgt angeordnet und ausgebildet sind: Die radiale Breite des Kupplungsteils 60 ist um mindestens so viel größer als diejenige des Kupplungsorgans 40, daß an der Mitte jeder Seitenkante des Kupplungsteils 60 je einer der Zapfen 72, 74, 76, 78 ausgebildet sein kann. Die Zapfen 72, 74, 76, 78 sind daher kreuzweise und mittig zwischen den Pfosten angeordnet. Die parallel zu der zugehörigen Seitenkante des Kupplungsteils 60 genommene Breite jedes Zapfens ist unter anderem so gewählt, daß ein Arm eines nicht dargestellten Greifers eines ebenfalls nicht dargestellten automatischen Werkzeugwechselmagazins zwischen je einem Pfosten und dem benachbarten Zapfen hindurchbewegt werden kann, um das Kupplungsgegenstück 90 an den Abflachungen 92, 94 ergreifen zu können, wenn das Kupplungsgegenstück 90 sich mittels Zugbolzen 30 am Bearbeitungskopf 1 befindet. Im übrigen ist jeder Zapfen 72. 74, 76, 78 an seinem freien Ende mit gegenüberliegenden, radiusparallelen und nach unten und innen geneigten Keilflächen versehen. Diese Keilflächen kreuzen die durch die Stirnflächen 61, 63, 65, 67 definierte (XY-)Ebene.

Ferner definieren die beiden durch je zwei gegenüberliegende Zapfen 72, 76 bzw. 74, 78 gelegten Mittellinien 71, 73 in ihrem Schnittpunkt die Lage einer nicht in die Figuren eingezeichneten Z'-Achse, die sich parallel zur Z-Achse 50 erstreckt. Im dargestellten Ausführungsbeispiel der Erfindung sind die Zapfen 72, 74, 76, 78 jedoch so ausgerichtet, daB die Mittellinien 71, 73 auf Radien liegen und daher die Z'-Achse mit der Z-Achse 50 kollinear ist.

Die Stirnflächen 61, 63, 65, 67 sowie die Keilflächen der Zapfen 72, 74, 76, 78 sind Referenzelemente eines zweiten Referenzsystems, zu dem ein zweites, mit Referenzgegenelementen ausgerüstetes Kupplungsgegenstück 80 (Figur 4) sowie ein zweiter Zugbolzen 58 (Figur 5) gehören. Der zweite Zugbolzen 58 besitzt einen Kopf 52, einen mittleren Abschnitt 54 und eine Eindrehung 51, die in ihren Abmessungen denjenigen des Kopfes 32, des mittleren Abschnittes 34 und der Eindrehung 31 des Zugbolzens 30 gleichen. Beide Zugbolzen 30 und 58 können daher in die Bolzenaufnahme 25 eingesetzt werden.

Wie ein Vergleich der Figuren 5 und 6 unschwer ergibt, hat der zweite Zugbolzen 58 jedoch eine größere axiale Länge als der erste Zugbolzen 30. Dies hat seine Ursache darin, daß der untere Abschnitt 56 des zweiten Zugbolzen 58 im Verhältnis zu dem unteren Abschnitt 36 des ersten Zugbolzens 30 um einen Ansatz axial verlangen ist Der Ansatz ist radial so stark verbreitert, daß seine Oberfläche nach Einsetzen des zweiten Zugbolzens 58 in die Bolzenaufnahme 25 das Kupplungsorgan 40, vollständig oder wenigstens soweit abdeckt, daß Luftaustrittsöffnungen 42a, 44a, 46a in den Flächenabschnitten 42, 44, 46 im wesentlichen luftdicht verschlossen sind. Am unteren Ende weist der untere Abschnitt 56 parallel zur Längsachse des Zugbolzens 58 sich erstreckende bezüglich der Längsachse gegenüberliegende Abflachungen 53, 55 auf, die sowohl in ihrer Axialerstreckung wie auch in ihrem gegenseitigen radialen Abstand den Abflachungen 92, 94 am ersten Kupplungsgegenstück 90 gleichen. Wenn der zweite Zugbolzen 58 in die Bolzenaufnahme 25 eingesetzt ist kann der erwähnte Greifer eines Werkzeugwechselmagazins den Zugbolzen 58 daher an den Abflachungen 53, 55 ergreifen. Im übrigen kann der zweite Zugbolzen 58 in an sich bekannter Weise an dem zweiten Kupplungsgegenstück 80 beispielsweise mit einem Bajonettverschluß gekoppelt werden.

Das zweite Kupplungsgegenstück 80 ist im wesentlichen der aus EP-A-0 255 042 bekannte Elektrodenhalter, sodaß zu dessen genauerer Beschreibung auf diese Schrift verwiesen werden kann. Es genügt daher hier darauf hinzuweisen, daß in den Eckbereichen der Oberseite des einen quadratischen Querschnitt aufweisenden Kupplungsgegenstücks 80 vier plan geschliffene Flächenstücke 81, 83, 85, 87 ausgebildet sind, die in einer zur Mittelachse des Kupplungsgegenstücks 90 senkrechten (XY-)Ebene liegen und beim Anspannen an das Kupplungsteil 60 mittels das Zugbolzens 58 mit den Stirnflächen 61, 63, 65, 67 zur Bildung einer Z-Referenz im zweiten Referenzsystem zusammenwirken. Ferner sind in die Oberseite vier Nuten 82, 84, 86, 88 mit radiusparallelen Flanken in kreuzweiser Anordnung so eingebracht, daß zwischen je zwei Flächenstücken 81, 83, 85, 87 je eine Nut 82, 84, 86, 88 mittig angeordnet ist. An den gegenüberliegenden Flanken jeder Nut ist jeweils ein Paar axialelastischer Lippen ausgebildet, dessen Lippen an der Nut 82 mit 82a und 82b bezeichnet sind. Die Anordnung ist insgesamt so getroffen, daß beim Anspannen des zweiten Kupplungsgegenstücks 80 an das Kupplungsteil 60 die Keilflächen der Zapfen 72, 74, 76, 78 soweit zwischen die Lippen eines Paares eindringen, bis die Flächenstücke 81, 83, 85, 87 zur Anlage an die Stirnflächen 61, 63, 65, 67 kommen. Das zweite Kupplungsgegenstück 80 ist dann sowohl in Z-Richung 50 wie auch in der XY-Ebene auf den Bearbeitungskopf 1 exakt ausgerichtet.

Man sieht daß das Kupplungsorgan 40 mit zugehörigen Referenzteilen 42, 44, 46 und 41, 43, 45 sowie das erste Kupplungsgegenstück 90 mit Referenzgegenteilen 91, 93, 98 und 95, 97, 99 zu einem ersten Referenzsystem und das Kupplungsteil 60 mit Referenzelementen 61, 63, 65, 67 sowie den Keilflächen der Zapfen 62, 64, 66, 68 mit zweitem Kupplungsgegenstück 80 zu einem zweiten Referenzsystem gehören, welches das erste Referenzsystem umgibt.

Vorstehend sind die beiden Referenzsysteme als auf das karthesische XYZ Orthogonalsystem ausgerichtet beschrieben worden. Die Erfindung ist jedoch in gleicher Weise anwendbar auf zwei verschiedene Referenzsysteme, von denen eines oder beide auf einem anderen Bezugssystem aufgebaut sind, beispielsweise auf Polarkoordinaten. Beide Referenzsysteme haben die Z-Achse 50 gemeinsam und bezüglich dieser Achse braucht die numerische Steuerung der Bearbeitungskopfes 1 beim Übergang vom inneren zum äußeren Referenzsystem nur eine Konstante d zu den Positionsangaben in Z-Richtung zu addieren, die dem axialen Abstand eines der Stirnflächen 61, 63, 65, 67 zu einem der ersten Referenzteile 42, 44, 46 entspricht. Die Positionsangaben in X-Richtung sowie in Y-Richtung bleiben bei dem Übergang unverändert. Die Positionierung des Greifers eines Werkzeugwechselmagazins in X-, Y-und Z-Richtung bleibt von dem Übergang unbeeinflußt, weil bei an den Bearbeitungskopf 1 angespanntern ersten Kupplungsgegenstück 90 die Lage der Abflachungen 92, 94 in Z-Richtung die gleiche ist wie die Lage der Abflachungen 53, 55 am zweiten Zugbolzen 58, wenn letzterer in die Bolzenaufnahme 25 eingesetzt ist.

Aus Figur 1 erkennt man, daß die ersten Referenzteile 42, 44, 46 die erwähnten Öffnungen 42a, 44a, 46a aufweisen, von denen jede über einen Druckluftkanal mit einer Druckluftquelle verbunden ist. Entsprechend mönden in jede der Stirnflächen 61, 63, 65, 67 je ein Druckluftkanal an Öffnungen, von denen eine mit 69 am Pfosten 68 angegeben ist. Jeder dieser Druckluftkanale steht mit einer Druckluftquelle in Verbindung. Nicht dargestellt sind Drucksensoren im Bearbeitungskopf oder in der Bearbeitungsmaschine, die eine Veränderung des Luftdruckes in den genannten Druckluftkanälen erfassen und der Maschinensteuerung melden. Wird beispielsweise das erste Kupplungsgegenstück 90 an das Kupplungsorgan 40 angesetzt, werden die Öffnungen 42a, 44a, 46a von den Flächen 91, 93, 98 verschlossen mit der Folge, daß der Luftdruck in den Druckluftkanälen ansteigt. Ein entsprechendes Signal aus dem zugehörigen Druckwächter interpretiert die Steuerung dahingehend, daß das erste Kupplungsgegenstück 90 an das Kupplungsorgan 240 angespannt ist.

Entsprechend kann die Steuerung das Anspannen des zweiten Kupplungsgegenstücks 80 an die Stirnflächen 61, 63, 65, 67 mittels eines weiteren Druckfühlers feststellen und dies zum Anlaß für den Übergang zum zweiten Referenzsystem nehmen.

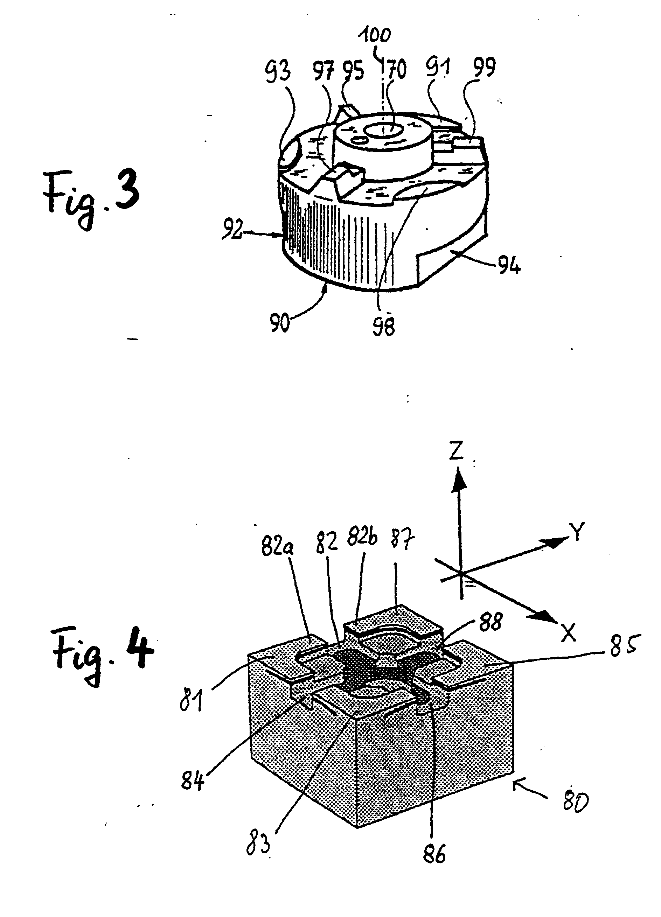

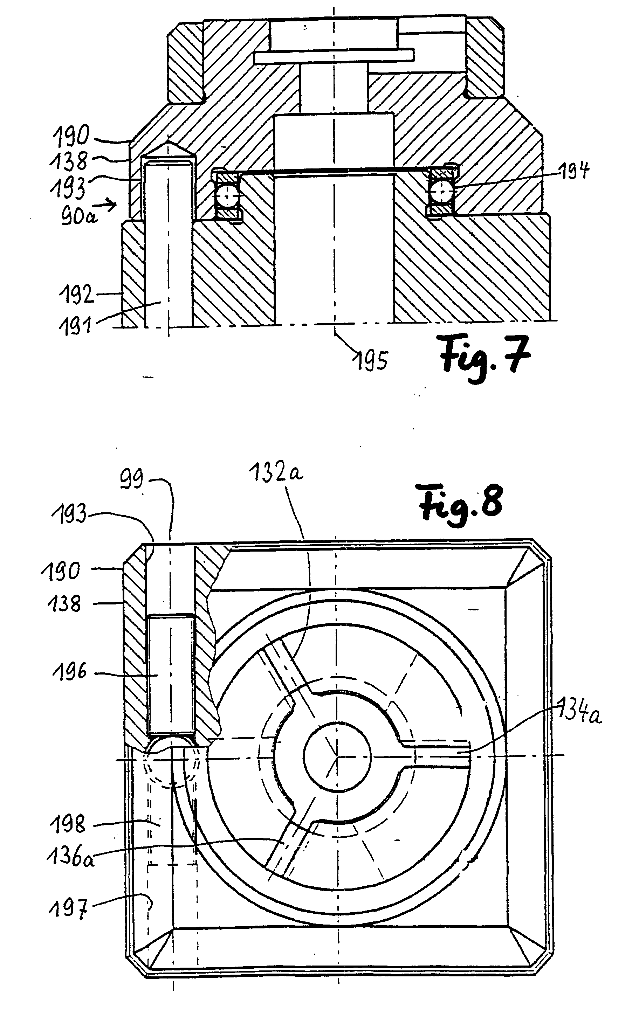

Zur Anpassung an die Erfindung kann das erste Kupplungsgegenstück 90 in einer besonderen Weise ausgeführt sein, wie das in Figuren 7 und 8 zeigen. Mit dieser Ausführungsform ist es möglich, eine der Leisten 95, 97, 99 in eine vorgegebene X-Richtung oder eine vorgegebene Y-Richtung feinnachzujustieren. Dazu weist das erste Kupplungsgegenstück 90a einen Aufsatz 190 auf, der relativ zu einem zur Verbindung mit einem zu bearbeitenden Werkstück vorgesehenen Unterteil 192 vermöge eines zwischen beide Teile eingelegten Kugellagerrings 194 um die gemeinsame Achse 195 drehbar ist. In den Korpus des Unterteils 192 ist ein sich parallel zur Achse 195 erstreckender Justierstift 191 eingepaßt, der sich über das Unterteil 192 erhebt und in eine geräumige Blinobohrung im Aufsatz 190 einfaucht. In den Aufsatz 190 sind zwei fluchtende Gewindebohrungen 193, 197 eingebracht, deren gemeinsame Mittellinie 199 sich quer zur Mittellinie des Justierstiftes 191 und im wesentlichen parallel zu einer Seitenkante 138 des Aufsatzes 190 erstreckt. In die Gewindebohrung 193 ist eine erste Justierschraube 196 und in die Gewindebohrung 197 eine zweite Justierschraube 198 soweit gedreht, daß die Justierschrauben 196, 198 den Justierstift 191 an gegenüberliegenden Seiten kontaktieren. Beispielsweise kann durch leichtes Herausdrehen der Justierschraube 196 innerhalb der Bohrung 193 und entsprechendes Einwärtsdrehen der Justierschraube 198 in der Bohrung 197 der Aufsatz 190 bei der Figur 3 wiedergegebenen Draufsicht in Uhrzeigerrichtung relativ zum Unterteil 192 gedreht und damit eine der Leisten 132a, 134a, 136a innerhalb der XY-Ebene auf eine bestimmte vorgegebene X- oder Y-Richtung nachjustiert werden.

## Patentansprüche

1. Spannsystem umfassend einen Werkstück-Bearbeitungskopf (1) mit einem Kupplungsorgan (40), ein Kupplungsgegenstück (90) und einen Zugbolzen (30), wobei an dem Werkstück-Bearbeitungskopf (1) eine druckmediumbetätigbare Spanneinrichtung (10, 15, 17, 19, 20) für den Zugbolzen (30) vorgesehen ist, das Kupplungsorgan (40) eine axiale Referenzachse (Z-Achse 50) sowie an seiner Stirnseite in einer zur Referenzachse senkrechten Ebene angeordnete, eine Z-Referenz definierende Referenzteile (42, 44 46) für ein erstes Referenzsystem aufweist und das Kupplungsgegenstück (90) an seiner Stirnfläche Referenzgegenteile (91, 93, 98; 95, 97, 99) für das erste Referenzsystem besitzt, **dadurch gekennzeichnet, dass** das Kupplungsorgan (40) von einem Kupplungsteil (60) umfangmäßig umgeben ist, dessen Achse (Z'-Achse) mit der Referenzachse (50) kolinear ist und das eine Z'-Referenz definierende Referenzelemente (61, 63, 65, 67) aufweist, welche einem zweiten Referenzsystem zugeordnet sind, und dass das Kupplungsgegenstück (90) bezüglich seiner Achse (100) gegenüberliegende, abgeflachte achsparallele Umfangsabschnitte (92, 94) zum Eingriff eines Werkzeugwechsel-Magazingreifers aufweist, und dass dem Kupplungsteil (60) ein zweiter Zugbolzen (58) für die Spanneinrichtung zugeordnet ist, welcher am unteren Ende Abflachungen (53, 55) aufweist, deren Lage in Z-Richtung die gleiche ist wie die Lage der Umfangsabschnitte bei mit dem Kupplungsgegenstück (90) verbundenen Zugbolzen (30).

2. System nach Anspruch 1, **dadurch gekennzeichnet, dass** die Z-Referenz und die Z'-Referenz einen festen axialen Abstand (d) aufweisen.

3. System nach einem der vorstehenden Ansprüche, **dadurch gekennzeichnet, dass** das Kupplungsteil (60) mehrere in Umfangsrichtung beabstandete, zur Referenzachse (Z-Achse) parallele Pfosten (62, 64, 66, 68) aufweist, deren freie Stirnflächen (61, 63, 65, 67) die Z'-Referenz bilden.

4. System nach Anspruch 3, **dadurch gekennzeichnet, dass** die Distanz zwischen benachbarten Referenzelementen mindestens gleich einem vorgegebenen Abstand zum Durchgriff eines Werkzeugs, beispielsweise eines Magazingreifers, ist.

5. System nach einem der vorstehenden Ansprüche, **dadurch gekennzeichnet, dass** für das erste und das zweite Referenzsystem ein erster (30) und ein zweiter (58) Zugbolzen vorgesehen sind, wobei der erste Zugbolzen (30) eine kleinere axiale Länge hat als der zweite Zugbolzen (58) und beide Zugbolzen einen gleichen, mit der Spanneinrichtung zusammenarbeitenden Kopf (32, 52) aufweisen.

6. System nach Anspruch 5, **dadurch gekennzeichnet, dass** der zweite Zugbolzen (58) an seinem dem Kopf (52) gegenüberliegenden Abschnitt (56) ein radial derart verbreitertes Profil hat, dass bei in die Spanneinrichtung eingefügtem zweiten Zuganker (58) die die Z-Referenz definierenden Referenzteile (42, 44, 46) im Wesentlichen luftdicht abgedeckt sind.

7. System nach Anspruch 1, **dadurch gekennzeichnet, dass** die Umfangsabschnitte (92, 94) zu den Referenzgegenteilen (91, 93, 98; 95, 97, 99) axial beabstandet sind.

8. System nach einem der vorstehenden Ansprüche, **dadurch gekennzeichnet, dass** die Referenzteile mehrere radiale Anlagekanten (41, 43, 45) für radiale, rippenförmige Referenzgegenteile (95, 97, 99) am Kupplungsgegenstück aufweisen, wobei jeder Anlagekante ein elastisches, in Umfangsrichtung beabstandetes Andruckelement (47, 48, 49) derart zugeordnet ist, dass beim Anspannen des Kupplungsgegenstücks (90) an das Kupplungsorgan (40) je ein rippenförmiges Referenzgegenteil zwischen Anlagekante und Andruckelement eindringen kann.

9. System nach einem der vorstehenden Ansprüche, **dadurch gekennzeichnet, dass** von dem Kupplungsgegenstück mehrere Flächenstücke (91, 93, 98) axial vorstehen, deren plane Oberflächen die Z-Referenz bilden.

10. System nach einem der vorstehenden Ansprüche, **dadurch gekennzeichnet, dass** ein zweites Kupplungsgegenstück (80) vorgesehen ist, welches an seiner freien Stirnfläche mit den Referenzelementen zusammenwirkende Referenzgegenelemente (81, 83, 85, 87; 82a, 82b) des zweiten Referenzsystems aufweist.

11. System nach Anspruch 10, **dadurch gekennzeichnet, dass** die Referenzgegenelemente kreuzweise angeordnet sind und jedes Referenzgegenelement wenigstens eine radiusparallele, axialelastische Lippe (82a, 82b) aufweist, welche an einer radiusparallelen Nut (82, 84, 86, 88) ausgebildet ist.

12. System nach Anspruch 10 oder 11, **dadurch gekennzeichnet, dass** die freie Stirnfläche des weiteren Kupplungsgegenstücks wenigstens abschnittsweise (81, 83, 85, 87) als Z'-Referenz ausgebildet ist.

13. System nach einem der vorstehenden Ansprüche, **gekennzeichnet durch** einen die Referenzgegenteile tragenden Aufsatz (190), welcher relativ zu einem das Werkstück tragenden Unterteil (192) axial drehbar ist, wobei eine zwischen Aufsatz (190) und Unterteil (192) wirkende Justiereinrichtung (191, 196, 198) vorgesehen ist.

14. System nach Anspruch 13, **dadurch gekennzeichnet, dass** am Unterteil (192) ein Justierzapfen (191) in axialer Ausrichtung vorhanden ist, der sich in den Aufsatz (190) erstreckt, wobei im Aufsatz (190) gegen den Justierzapfen (191) zur Anlage bringbare Stellschrauben (196, 198) vorgesehen sind.

## Claims

1. Clamping system comprising a workpiece machining head (1) with a coupling body (40), a coupling counterpiece (90) and a drawbolt (30), whereby a pressure-medium actuated clamping device (10, 15, 17, 19, 20) for the drawbolt (30) is provided on the workpiece machining head (1), the coupling body (40) has an axial reference axis (Z-axis 50) as well as reference parts (42, 44, 46) arranged at its front face in a plane perpendicular to the reference axis, said reference parts defining a Z-reference for a first reference system, and the coupling counterpiece (90) has reference counterparts (91, 93, 98; 95, 97, 99) on its front face for the first reference system, **characterised in that** the coupling body (40) is surrounded by a coupling part (60), whose axis (Z'-axis) is collinear with the reference axis (50) and which has reference elements (61, 63, 65, 67) defining a Z'-reference, which are assigned to a second reference system, and that the coupling counterpart (90) has flattened axially parallel peripheral sections (92, 94) opposite each other relative to its axis (100), for gripping a tool changing magazine gripper, and that a second drawbolt (58) is allocated to the coupling part (60) for the clamping device, which at its lower end has flattenings (53, 55), whose position in the Z-direction is the same as the position of the peripheral sections with the drawbolt (30) linked to the coupling counterpart (90).

2. System according to claim 1, **characterised in that** the Z-reference and the Z'-reference have a fixed axial separation (d).

3. System according to one of the previous claims, **characterised in that** the coupling part (60) has a plurality of posts (62, 64, 66, 68) spaced in the peripheral direction, parallel to the reference axis (Z-axis), the free front surfaces (61, 63, 65, 67) of which comprise the Z'-reference.

4. System according to claim 3, **characterised in that** the distance between neighbouring reference elements is at least equal to a predetermined separation for the passage of a tool, for example of a magazine gripper.

5. System according to one of the previous claims, **characterised in that** for the first reference system and for the second reference system, a first (30) and a second (58) drawbolt are provided, whereby the first drawbolt (30) has a shorter axial length than the second drawbolt (58) and both drawbolts have a similar head (32, 52) acting in combination with the clamping device.

6. System according to claim 5, **characterised in that** the second drawbolt (58), on its section (56) opposite to the head (52) has a profile which is radially enlarged in such a way that, when a second drawbolt (58) is inserted in the clamping device, the reference parts (42, 44, 46) defining the Z-reference are substantially covered in an airtight way.

7. System according to claim 1, **characterised in that** the circumferential sections (92, 94) are axially spaced from the reference counterparts (91, 93, 98; 95, 97, 99).

8. System according to one of the previous claims, **characterised in that** the reference parts have a plurality of radial contact edges (41, 43, 45) for radial rib-shaped reference counterparts (95, 97, 99) on the coupling counterpiece, whereby an elastic pressure element (47, 48, 49), spaced in the circumferential direction, is allocated to each contact edge in such a way that when clamping the coupling counterpiece (90) to the coupling body (40), respectively one rib-shaped reference counterpart can penetrate between the contact edge and the pressure element.

9. System according to one of the previous claims, **characterised in that** a plurality of surface portions (91, 93, 98) project axially from the coupling counterpiece, the planar surfaces of said portions comprising the Z-reference.

10. System according to one of the previous claims, **characterised in that** a second coupling counterpiece (80) is provided which, on its free front surface, has reference counter-elements (81, 83, 85, 87; 82a, 82b) which cooperate with the reference elements of the second reference system.

11. System according to claim 10, **characterised in that** the reference counter-elements are arranged crosswise and that each reference counter-element has at least one radially parallel, axially elastic lip (82a, 82b) which is formed on a radially parallel groove (82, 84, 86, 88).

12. System according to claim 10 or 11, **characterised in that** the free front surface of the further coupling counterpiece is formed as the Z'-reference at least in sections (81, 83, 85, 87).

13. System according to one of the previous claims, **characterised by** an attachment (190) bearing the reference counterparts which is axially pivotable with respect to a lower part (192) carrying the workpiece, whereby an adjusting device (191, 196, 198) acting between the attachment (190) and the lower part (192) is provided.

14. System according to claim 13, **characterised in that** an adjusting pin (191) is located on the lower part (192) in axial orientation, said pin extending into the attachment (190), whereby in the attachment (190) setting screws (196, 198) are provided which can be brought to rest against the adjusting pin (191).

## Revendications

1. Système de serrage comprenant une tête (1) d'usinage de pièces à usiner, avec un organe d'accouplement (40), une pièce d'accouplement (90) faisant pendant et un tirant d'ancrage (30), une installation de serrage (10, 15, 17, 19, 20) actionnable par un fluide pressurisé, affectée au tirant d'ancrage (30), étant prévue sur ladite tête d'usinage (1), l'organe d'accouplement (40) présentant un axe de référence axiale (axe Z) (50), ainsi que des parties de référence (42, 44, 46) définissant une référence Z pour un premier système de référence, disposées sur son côté frontal dans un plan vertical par rapport à l'axe de référence, et la pièce d'accouplement (90) faisant pendant possédant, sur sa surface frontale, des contreparties de référence (91, 93, 98 ; 95, 97, 99) pour le premier système de référence, **caractérisé par le fait que** l'organe d'accouplement (40) est entouré, sur son pourtour, d'une partie d'accouplement (60) dont l'axe (axe Z') s'étend colinéairement à l'axe de référence (50), et qui présente des éléments de référence (61, 63, 65, 67) définissant une référence Z' et attribués à un second système de référence ; **par le fait que** la pièce d'accouplement (90) faisant pendant présente des portions circonférentielles aplaties (92, 94), parallèles à l'axe, opposées par rapport à son axe (100), en vue de l'engagement d'un grappin à magasin de remplacement d'outillage ; et **par le fait qu'**un second tirant d'ancrage (58) destiné à l'installation de serrage est affecté à la partie d'accouplement (60) et comporte, à l'extrémité inférieure, des méplats (53, 55) dont la position, dans la direction Z, est la même que la position des portions circonférentielles lorsque le tirant d'ancrage (30) est relié à la pièce d'accouplement (90) faisant pendant.

2. Système selon la revendication 1, **caractérisé par le fait que** la référence Z et la référence Z' présentent un intervalle axial (d) fixe.

3. Système selon l'une des revendications précédentes, **caractérisé par le fait que** la partie d'accouplement (60) présente plusieurs tiges (62, 64, 66, 68) parallèles à l'axe de référence (axe Z), espacées dans le sens circonférentiel, et dont les surfaces frontales libres (61, 63, 65, 67) forment la référence Z'.

4. Système selon la revendication 3, **caractérisé par le fait que** la distance, entre des éléments de référence voisins, est au moins égale à un intervalle prédéterminé pour permettre l'intervention d'un outil, par exemple d'un grappin à magasin.

5. Système selon l'une des revendications précédentes, **caractérisé par le fait que** des premier (30) et second (58) tirants d'ancrage sont prévus pour les premier et second systèmes de référence, le premier tirant (30) ayant une longueur axiale inférieure à celle du second tirant (58), et les deux tirants d'ancrage présentant une tête semblable (32, 52) coopérant avec l'installation de serrage.

6. Système selon la revendication 5, **caractérisé par le fait que**, sur sa portion (56) opposée à la tête (52), le second tirant d'ancrage (58) a un profil radialement élargi de telle sorte que, lorsque ledit second tirant d'ancrage (58) est introduit dans l'installation de serrage, les parties de référence (42, 44, 46) définissant la référence Z soient recouvertes de façon essentiellement hermétique.

7. Système selon la revendication 1, **caractérisé par le fait que** les portions circonférentielles (92, 94) sont espacées axialement par rapport aux contreparties de référence (91, 93, 98 ; 95, 97, 99).

8. Système selon l'une des revendications précédentes, **caractérisé par le fait que** les parties de référence présentent plusieurs arêtes radiales de contact (41, 43, 45) pour des contreparties radiales de référence (95, 97, 99) en forme de nervures sur la pièce d'accouplement faisant pendant, un élément élastique de pression (47, 48, 49), espacé dans le sens circonférentiel, étant affecté à chaque arête de contact de telle sorte que, lors du serrage de la pièce d'accouplement (90) faisant pendant, sur l'organe d'accouplement (40), une contrepartie de référence en forme de nervure puisse respectivement pénétrer entre l'arête de contact et l'élément de pression.

9. Système selon l'une des revendications précédentes, **caractérisé par le fait que** plusieurs parties de surfaces (91, 93, 98), dont les surfaces planes forment la référence Z, dépassent axialement de la pièce d'accouplement faisant pendant.

10. Système selon l'une des revendications précédentes, **caractérisé par le fait qu'**il est prévu une seconde pièce d'accouplement (80) faisant pendant qui présente, sur sa surface frontale libre, des contre-éléments de référence (81, 83, 85, 87 ; 82a, 82b) du second système de référence, coopérant avec les éléments de référence.

11. Système selon la revendication 10, **caractérisé par le fait que** les contre-éléments de référence sont disposés en croix, et chaque contre-élément de référence présente au moins une lèvre (82a, 82b) axialement élastique et radialement parallèle, qui est façonnée sur une rainure (82, 84, 86, 88) radialement parallèle.

12. Système selon la revendication 10 ou 11, **caractérisé par le fait que** la surface frontale de l'autre pièce d'accouplement faisant pendant est conçue, au moins par portions (81, 83, 85, 87), en tant que référence Z'.

13. Système selon l'une des revendications précédentes, **caractérisé par** un chapeau (190) portant les contreparties de référence et pouvant tourner axialement par rapport à une partie inférieure (192) portant la pièce à usiner, sachant qu'il est prévu un dispositif d'ajustement (191, 196, 198) agissant entre le chapeau (190) et la partie inférieure (192).

14. Système selon la revendication 13, **caractérisé par le fait qu'**un tourillon d'ajustement (191), placé axialement sur la partie inférieure (192), s'étend jusque dans le chapeau (190), des vis de réglage (196, 198), pouvant venir s'appliquer contre ledit tourillon d'ajustement (191), étant prévues dans ledit chapeau (190).
